(19) Europäisches Patentamt / European Patent Office / Office européen des brevets

(11) **EP 2 878 807 B1**

(12) **EUROPEAN PATENT SPECIFICATION**

(45) Date of publication and mention
of the grant of the patent:
**12.04.2023   Bulletin 2023/15**

(21) Application number: **14193435.6**

(22) Date of filing: **17.11.2014**

(51) International Patent Classification (IPC):
**F03D 1/06** $^{(2006.01)}$        **B29C 65/00** $^{(2006.01)}$
**B29C 65/48** $^{(2006.01)}$

(52) Cooperative Patent Classification (CPC):
(C-Sets available)
**F03D 1/0675;** B29C 65/48; B29C 65/7805;
B29C 66/112; B29C 66/114; B29C 66/324;
B29C 66/43441; B29C 66/5326; B29C 66/54;
B29C 66/636; B29C 66/7212; B29C 66/72141;
B29L 2031/085; Y02E 10/72; Y02P 70/50    (Cont.)

(54) **Spar caps-shear web assembly configuration for wind turbine blades, and methods thereof**

Holmgurt-Scherbahnanordnungskonfiguration für Windturbinenschaufeln und Verfahren dafür

Configuration d'ensemble d'âme de cisaillement et longeron pour pales d'éolienne et procédés associés

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **02.12.2013   US 201314094079**

(43) Date of publication of application:
**03.06.2015   Bulletin 2015/23**

(73) Proprietor: **General Electric Company**
**Schenectady, NY 12345 (US)**

(72) Inventors:
 • **Merzhaeuser, Thomas**
 **Niskayuna, NY 12309 (US)**
 • **Veldkamp, Bart Jan**
 **Niskayuna, NY 12309 (US)**

(74) Representative: **ZBM Patents - Zea, Barlocci & Markvardsen**
**Rambla Catalunya, 123**
**08008 Barcelona (ES)**

(56) References cited:
**EP-A1- 2 843 227**        **WO-A1-2013/086667**
**US-A- 5 476 704**        **US-A1- 2006 113 451**
**US-A1- 2011 008 175**

• **Ginger Gardiner: "Wind blades: Pi preforms increase shear web failure load : CompositesWorld", , 1 October 2013 (2013-10-01), XP055180394, Retrieved from the Internet: URL:http://www.compositesworld.com/article s/wind-blades-pi-preforms-increase-shear-w eb-failure-load- [retrieved on 2015-03-31] & Ginger Gardiner: "Wind blades: Pi preforms increase shear web failure load : CompositesWorld", , 1 October 2013 (2013-10-01), XP055180385, Retrieved from the Internet: URL:http://www.compositesworld.com/article s/wind-blades-pi-preforms-increase-shear-w eb-failure-load- [retrieved on 2015-03-31]**

(52) Cooperative Patent Classification (CPC): (Cont.)

C-Sets
B29C 66/7212, B29K 2309/08

**Description**

The invention relates generally to wind turbine blades. More particularly, the invention relates to spar caps, and their assembly configuration with shear webs within the wind turbine blades, and methods for assembling shear webs in the wind turbine blades.

Turbine blades are the primary elements of wind turbines for converting kinetic energy in wind into electrical energy. The blades have the cross-sectional profile of an airfoil such that, during operation, air flows over the blade producing a pressure difference between the sides. Consequently, a lift force, which is directed from a pressure side towards a suction side, acts on the blade. The lift force generates torque on the main rotor shaft, which is geared to a generator for producing electricity.

Conventional devices are described, for example, in Gardiner et al, Composites World, XP55180394 and WO 2013/086667.

The turbine blades typically consist of a suction side shell and a pressure side shell that are bonded together at bond lines along the trailing and leading edges of the blade. An internal shear web extends between the pressure and suction side shell members, and is bonded to spar caps affixed to the inner faces of the shell members. The shear web should have sufficient dimensions (for example, width) to provide enough surface area to securely bond, by a bond paste for example. Furthermore, relatively exact length dimensions are required for the shear web to span between the spar caps and achieve a bond between the spar caps and the transverse ends of the shear web. Achieving these dimensions, as well as an adequate bond, can be difficult, and forming the juncture between the spar caps and shear web is a time-consuming and tedious process that often requires significant re-work.

Accordingly, it would be desirable to have an improved bond configuration between a shear web and spar caps that addresses one or more of the deficiencies of certain conventional configurations.

Accordingly, the present invention, as defined by the appended claims, is provided. Various features and aspects of the present invention will become better understood when the following detailed description is read with reference to the accompanying drawings in which like characters represent like parts throughout the drawings.

> FIG. 1 is a prospective view of a conventional wind turbine;
> FIG. 2 is a perspective view of a conventional wind turbine blade;
> FIG. 3 is a cross-sectional view of a conventional wind turbine blade;
> FIG. 4 is an enlarged cross-sectional view of an assembly of a spar cap and a shear web, in accordance with a non-claimed example;
> FIG. 5 is an enlarged cross-sectional view of an assembly of a spar cap and a shear web, in accordance with another non-claimed example;
> FIG. 6 is an enlarged cross-sectional view of an assembly of a spar cap and a shear web, in accordance with yet another non-claimed example; and
> FIG. 7 is an enlarged cross-sectional view of an assembly of a spar cap and a shear web, in accordance with an embodiment of the invention.

Approximating language, as used herein throughout the specification and claims, may be applied to modify any quantitative representation that could permissibly vary, without resulting in a change in the basic function to which it is related. Accordingly, a value modified by a term or terms, such as "about," is not limited to the precise value specified. In some instances, the approximating language may correspond to the precision of an instrument for measuring the value.

In the following specification and claims, the singular forms "a", "an" and "the" include plural referents unless the context clearly dictates otherwise. As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances, the modified term may sometimes not be appropriate, capable, or suitable.

The terms "comprising," "including," and "having" are intended to be inclusive, and mean that there may be additional elements other than the listed elements. As used herein, the term "and/or" includes any and all combinations of one or more of the associated listed items.

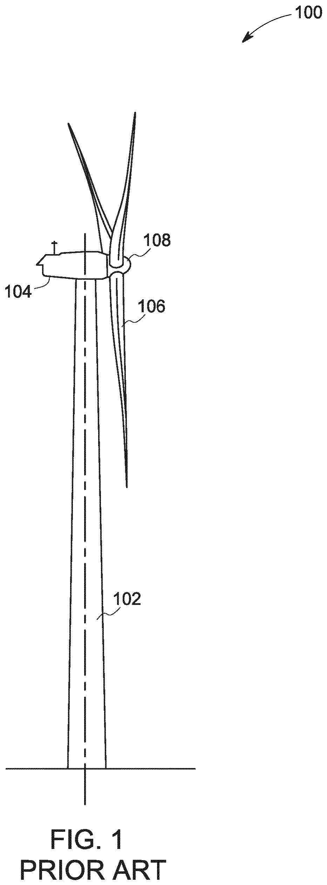

FIGS. 1-3 are provided for illustrative purposes only to place the present invention in an exemplary field of use. It should be appreciated that the invention is not limited to any particular type of wind turbine configuration.

FIG. 1 illustrates a wind turbine 100 of conventional construction. The wind turbine 100 includes a tower 102 with a nacelle 104 mounted thereon. A plurality of turbine blades 106 are mounted to a rotor hub 108, which is in turn connected to a main flange that turns a main rotor shaft. The wind turbine power generation and control components are housed within the nacelle 104.

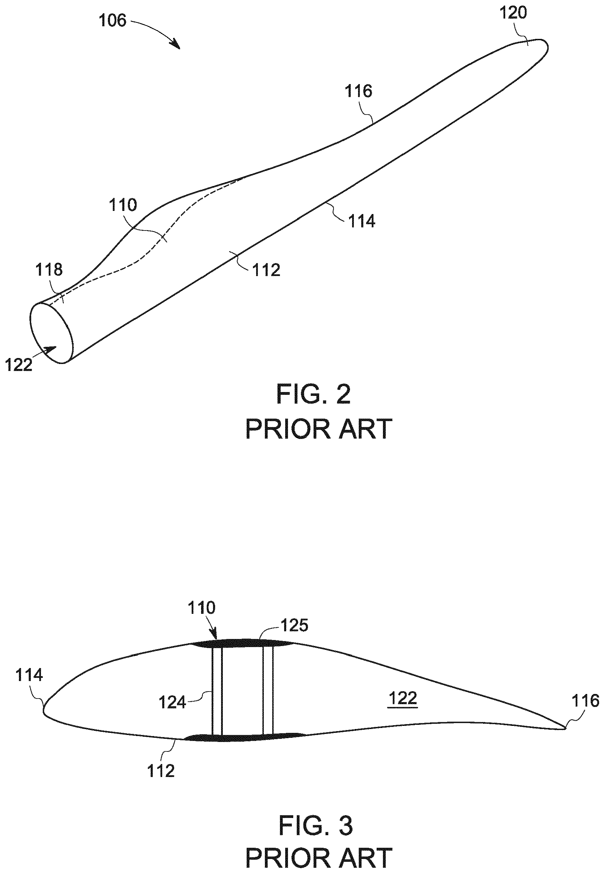

FIG. 2 is a detailed view of a wind turbine blade 106. The blade 106 includes an upper shell member 110 and a lower shell member 112. The upper shell member 110 may be configured as the suction side surface of the blade 106, while the lower shell member 112 may be configured as the pressure side surface of the blade 106. These shell members 110 and 112 are typically fabricated from layers of woven fabric and resin. The blade 106 includes a leading edge 114 and a trailing edge 116, as well as a root portion 118, and a tip portion 120. As is well known in the art, the upper shell member 110, and the lower shell member 112 are joined together at the leading edge 114 and the trailing edge 116. The blade 106 includes an internal cavity 122 (FIGS. 2 and 3) in which various structural members, such as spar caps and one or more shear webs, are configured.

FIG. 3 is a cross-sectional view of a wind turbine blade 106 (FIG. 2). The blade 106 includes one or more internal structural shear webs 124 that span between the upper shell member 110 and lower shell member 112 to form a structural support. In particular, the shear web 124 spans between spar caps 125 that are configured on internal surfaces of the shell members 110 and 112. The shear webs 124 and the spar caps 125 extend at least along a longitudinal length of the blade 106, and are typically, but not necessarily, configured as I-shaped members. A longitudinal length of the blade 106 is the distance between the root portion 118 and the tip portion 120 (FIG.2), at the opposite ends of the blade 106.

The spar caps 125 are usually fixed to an internal surface of the shell member or placed in the shell member. The spar caps typically comprises of an assemblage of layers of unidirectional (UD) composite fiber. The cross-sections at any section along the length of the spar cap 125 are often rectangular. The fabrication of each of these constituent parts (for example, shell members, spar caps) involves a labor-intensive process that includes for instance, laying out fabric, glass fibers, and/or foam, followed by or with intervening resin application steps.

As used herein, a contact length of a shear web with a bonding material provided between the shear web and a spar cap is referred to as a bond width (BW). The bond width of the shear web may be a measure of the surface area of the shear web bonded to or in contact with the bonding material. A "bond thickness" of a shear web with a spar cap refers to a gap between a portion of the shear web (that is in contact with a bonding material) and a portion of the spar cap, which is usually occupied by the bonding material to join/bond the two portions.

With typical blade construction, the shear web 124 is joined to the spar caps 125 using a bonding material, such as an adhesive or a bond paste. As discussed previously, the length dimension of the shear web should be sufficient to span between the spar caps, and the thickness dimension (i.e., width) should be enough to provide enough surface area (which can be assessed by measuring a bond width BW) to securely bond with the bond paste.

Various designs have been proposed to achieve a desired bond width between the spar caps and the shear web, for example using a shear web with a laminate or c-flange, use of a rigid flange etc. These configurations, however, do not accommodate relatively large length variances (e.g., shortages) in the shear web, and often result in break off and blade "rattling" during operation of the wind turbine. In addition, air voids, unpredictable misalignment, peel-off, and squeeze-out of the bond paste, and insufficient bond width in the typical production processes, can result in areas of decreased bond strength, which is particularly problematic in inaccessible sections of the blade where repair is not possible. Moreover, these production processes involve various testing steps, for example to measure the required bond thickness to determine the required amount of the bond paste, and to ensure minimum required bond width, especially in inaccessible sections of the blade (for example, from about 20 meters from the root portion to the tip portion of a blade). These measurements usually require closing and opening the blade (i.e., joining the upper shell 110 and the lower shell 112) at least once.

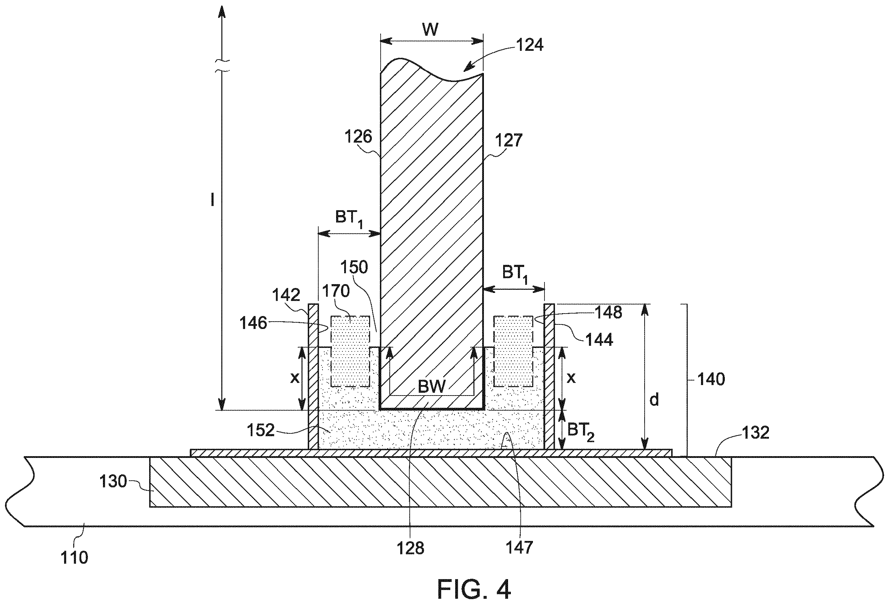

Various aspects of the invention described herein address the noted shortcomings of the state of the art. Referring to FIG. 3 again, at least one shell member, the lower shell member 110 or the upper shell member 112, or both members include an improved spar cap 130 (FIG. 4) according to some embodiments of the present invention as described in greater detail below. The present invention also encompasses various method embodiments for assembling the shear web 124 to the improved spar caps 130 within the wind turbine blade.

FIG. 4 depicts an enlarged cross-sectional illustration of a portion of a shell member 110 having an improved spar cap 130 bonded to a shear web 124. In some embodiments, the spar caps 130 may be integrated with the shell members 110. For example, the spar caps 130 may be positioned inside of the internal and outer surfaces of the shell member 110, or may form part of the shell member 110. The spar cap 130 includes a cavity structure 140 configured on a surface 132 of the spar cap 130. The cavity structure 140 includes two parallel side walls 142 and 144 extending away from the surface 132. The side walls 142 and 144 may be about 0.5 millimeters to about 3 millimeters thick. The cavity structure 140 includes a cavity 150 defined by the inner surfaces 146 and 148 of the side walls 142 and 144, and a bottom surface 147 between the extended side walls 142 and 144. In some instances, the bottom surface 147 may be a portion of the surface 132 of the spar cap 130.

The cavity structure 140 can extend fully or partially along the longitudinal length of the spar cap 130. The cavity structure 140 can also be understood to include a longitudinal cavity 150 e.g., a grove. The cross section of the cavity 150 may be cup-shaped with sharp or round corners. During construction of the blade, the cavity structure 140 can be manufactured during the infusion of the spar cap 130 or the shell member 110. Other techniques may be used as well. Various composite fibers may be used for the cavity structure 140 similar to the material used for spar caps. In one embodiment, the cavity structure 140 is formed of a fiber reinforced plastic.

The cavity structure 140 can be positioned substantially at the middle of the spar cap 130 to accept a shear web 124. The cavity 150 may be wide enough to accommodate the shear web 124, and may have a length to define a depth 'd' of the cavity 150. In some embodiments, the cavity 150 may have a depth between about 50 millimeters and 150 millimeters, and a width between about 10 millimeters to about 100 millimeters.

The shear web 124 may have a length or height '1' in the span wise direction and a width or thickness 'w.' In some instances, the width 'w' of the shear web 124 may vary along the longitudinal length of the blade 106 (FIG. 2). In some of these instances, the width of the cavity 150 may also vary accordingly. The shear web 124 can be positioned in the cavity 150 to be joined with the cavity structure 140 of the spar cap 130. In some instances, the transverse end 128 of the shear web 124 is positioned within the cavity 150 so the side walls 142 and 144 of the cavity structure 140 extend along the longitudinal sides (shear web sides) 126 and 127 of the shear web 124. The cavity 150 contains a bonding material (for example, a bond paste) 152 to adhere the shear web 124. In the illustrated embodiments of FIGS. 4-7, the shear web 124 is positioned in the middle of the cavity 152, and substantially perpendicular to the bottom surface 147. In these instances, the transverse end 128 and a portion (of height or length 'x') of each of the longitudinal sides 126 and 127 of the shear web 124 along the length '1' is immersed (or encased) into the bonding material 152. These portions of the longitudinal sides 126 and 127 of the shear web 124 immersed into the bonding material 152 may be referred to as "immersion thickness" of the shear web 124. In some other embodiments, the shear web 124 may not be perpendicular to the bottom surface 147, and have varying immersion thicknesses along the longitudinal side walls 126 and 127.

Referring to FIG. 4, the bond width (BW) of the shear web is equal to the addition of the width (w) of the shear web 124 and the immersion thicknesses of the shear web side walls 126 and 127,

$$\text{Bond Width (BW)} = w + x + x$$

A bond thickness between a portion of thickness 'x' of the longitudinal side walls 127 or 126 of the shear web 124 and the corresponding (or closest) side wall 144 or 142 of the cavity 150 is referred to as $BT_1$, and the bond thickness of the transverse end 128 of the shear web 124 and the bottom surface 147 of the cavity 150 is referred to as $BT_2$, throughout the specification.

As described previously, the cavity 150 can be sized to have a width greater than the width (w) of the shear web 124, and provides a substantial bond thickness $BT_1$. As used herein, a substantial bond thickness $BT_1$ refers to at least about 5 percent of the width (w) of the shear web 124. According to some embodiments of the invention, a ratio of the width of the shear web (w) to the bond thickness $BT_1$ of the shear web 124 with the cavity side wall (142 or 144) may be between about 1:1 and about 15:1. In certain instances, the ratio may range between about 4:1 and about 14:1. The bond thickness

$BT_1$ may provide a space to the bonding material to squeeze up/down while positioning the shear web 124 into the bonding material 152, and adjust (increase/decrease) the immersion thickness 'x' of the shear web 124, to achieve the required bond width (BW) of the shear web. In one embodiment, the bond thickness $BT_1$ ranges between about 1 millimeter and about 10 millimeters.

In a particular method embodiment, a cavity structure 140 is configured on a surface of the spar cap 130, having two parallel side walls 142 and 144 defining a cavity 150 (as explained previously), along the longitudinal length of the blade 106. A bonding material 152 is disposed within the cavity 150. The shear web 124 is then pushed into the bonding material 152 such that the transverse end 128 and a portion of the shear web 124 are immersed into the bonding material 152. As the shear web 124 pushes into the bonding material 152, the bonding material gets squeezed at $BT_1$, and rises up along the longitudinal side walls of the shear web 124. That means that the immersion thickness 'x' of the shear web 124 increases as the transverse end 128 of the shear web 124 moves inside the bonding material 152. In some embodiments, the shear web 124 can be pushed in the bonding material 152 until predetermined values of the bond thickness $BT_2$, and /or the bond width (BW) is attained to achieve high bond strength. The method further includes steps of positioning the shear web 124 in the cavity 150 such that a ratio of the width of the shear web (w) to the bond thickness $BT_1$ may be between about 1:1 and about 15:1. In certain instances, the ratio may range between about 4:1 and about 14:1.

The method may further include providing the bonding material 152 in the cavity 150 in a measured amount and compressing the shear web 124 into the bonding material 152 until a required BW is achieved. A predetermined amount of the bonding material may help in preventing or reducing squeeze-out of the boding material from the cavity 150 during the assembly of the shear web 124 with the cavity structure 140 of the spar cap, while maintaining the required BW and bond thickness $BT_2$. In one embodiment, the cavity 150 contains at least about 50 percent of the bonding material by volume of the cavity. The volume of the cavity 150 refers to a volume occupied between the parallel side walls 142 and 144 of depth 'd' and the bottom surface 147. In some embodiments, the amount of the bonding material may range between about 70 percent and about 90 percent, by volume of the cavity.

In some embodiments, the bond width (BW) of the shear web 124 with the bonding material 152 ranges from about 20 millimeters to about 200 millimeters. The bond thickness $BT_2$ may be up to about 30 millimeters. In some embodiments, the bond thickness $BT_2$ ranges from about 1 millimeter to about 30 millimeters.

The above described design of the spar caps, and their bond configuration with the shear web, accommodate large variance in the bond thickness $BT_2$ and the bond width (BW), which improves strength and tolerance of the bond between the shear web and spar caps. Moreover, the present designs may result in shear stress instead of peel stress and, moreover, uniformly distributed bond stress, which improves the reliability of the bond.

Unlike conventional designs and processes, the aspects of the present invention allow adjusting the bond thickness $BT_2$ and the bond width BW by changing the immersion thickness of the shear web. The bond width BW is not dependent on the thickness of the shear web, and can be adjusted to achieve sufficient surface area required to have a secure bond of high bond strength. The bond thickness $BT_2$ can accommodate any length deviations of the shear web, and can be adjusted to provide largest possible tolerance. In addition to several technological advantages, the aspects of the present invention further enable to use cost effective shear webs.

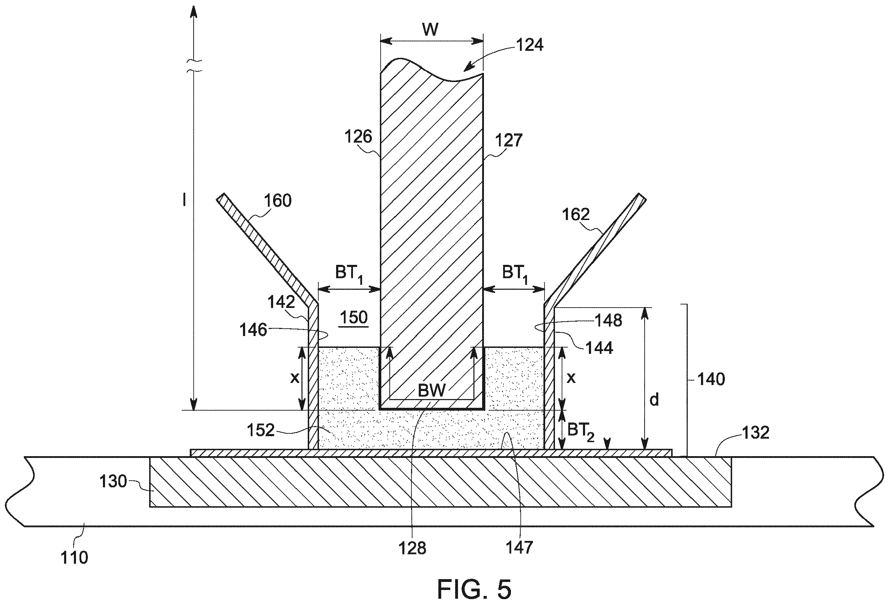

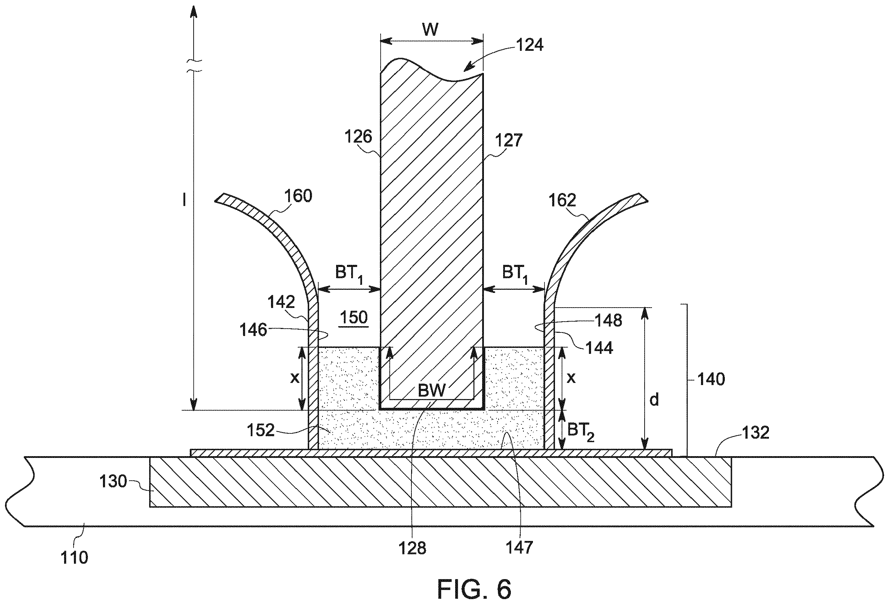

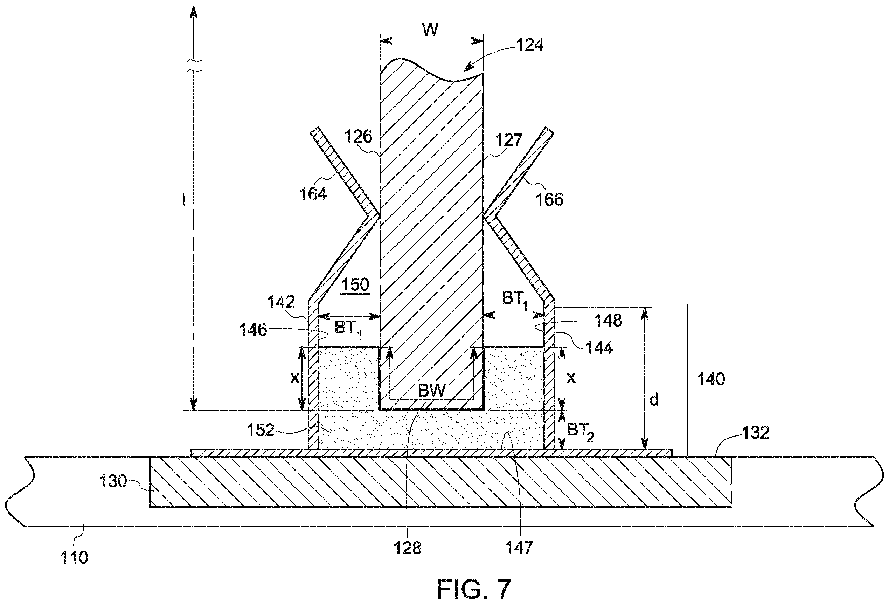

FIGS. 5-7 show a claimed embodiment and non-claimed examples including some additional design features. The cavity side walls 142 and 144 are extended further from the top end of the U shape cavity 150. FIGS. 5-7 show the extended portions 160, 162. These portions may be helpful in preventing any squeeze out of the bonding material 152. These designs also help to align the shear web 124 in the center of the cavity 150 if misaligned. In some non-claimed instances, the side walls may be extended in a 'V' shape as depicted in FIG.5. In some other non-claimed instances, these portions may be shaped rounded as shown in FIG. 6. In some embodiments, a support can be provided to shear web. FIG. 7 depicts extension of the side walls of the cavity in such a way to support the shear web 124. According to the invention, the extended portions also act as distance holder that can hold the shear web in the center of the cavity. FIG. 4 shows some non-claimed examples that include integrated distance holders 170 introduced at specific locations around the shear web 125 within the gap (bond thickness BT1) between the shear web and the sidewalls of the cavity.

The shape and size of the several components discussed above with reference to FIGS. 1-7 are only illustrative for the understanding of the blade structure, and design and geometry of various components, and are not meant to limit the scope of the invention which is defined by the claims.

The present invention also encompasses any configuration of a wind turbine 100 (FIG. 1) wherein at least one of the blades 106 includes the spar caps and the shear web assembly configuration as discussed above. As it has been described in detail with respect to specific exemplary embodiments and methods thereof, it will be appreciated that those skilled in the art, upon attaining an understanding of the foregoing, may readily produce alterations to, variations of, and equivalents to such embodiments. Accordingly, the scope of the present disclosure is by way of example rather than by way of limitation, and the subject disclosure does not preclude inclusion of such modifications, variations and/or additions to the present subject matter as would be readily apparent to one of ordinary skill in the art.

Embodiments of the present invention provide advantages to leverage a relatively inexpensive, simple, and rapid process to assemble and join a shear web with the spar caps while manufacturing a wind turbine blade, as compared to currently available methods. The resulting joint/bond may have high strength and reliability due, in part, to improved bond thickness and bond width. Moreover, an additional advantage is the ability to assemble the shear web without several testing steps, and thus to manufacture the blade in simpler steps, as compared to known multi-step, cumbersome manufacturing processes. In brief, the aspects of the present invention simplify the assembly process of shear webs, and improve the reliability and tolerance of the shear web-spar caps bond.

While only certain features of the invention have been illustrated and described herein, many modifications and changes will occur to those skilled in the art. It is, therefore, to be understood that the appended claims are intended to cover all such modifications and changes as fall within the scope of the claims.

**Claims**

1. A wind turbine blade (106), comprising:

    an upper shell member (110) having a spar cap (130) disposed on an internal surface of the upper shell,
    a lower shell member having a spar cap disposed on an internal surface of the lower shell, wherein the spar cap (130) of the upper shell member (110), the spar cap of the lower shell member or both the spar caps comprises at least one cavity structure (140) comprising side walls (142,144) extending along a longitudinal length of the blade,
    at least one shear web (124) extending between the spar caps (130) along the longitudinal length of the blade, with a transverse end of the shear web (124) positioned in the at least one cavity structure (140), wherein a ratio of a width of the shear web (124) to a bond thickness of a longitudinal side of the shear web (124) with the corresponding side wall (142,144) of the cavity structure (140) is between 1:1 and 15: 1, and wherein the at least one cavity structure (140) comprises a cup-shaped cavity having a bottom wall between the side walls extending away from the spar cap (130) so as to extend along the longitudinal sides of the shear web (124),
    **characterized by** the side walls having extended portions from a top end of the cup-shaped cavity,
    a distance holder to hold the shear web in the center of the cavity, wherein the extended portions are distance holders.

2. The wind turbine blade (106) of claim 1, wherein the cavity (140) has a depth from 50 millimeters to 150 millimeters.

3. The wind turbine blade (106) of any preceding claim, wherein the cavity (140) has a width in a range from 10 millimeters to 100 millimeters.

4. The wind turbine blade (106) of any preceding claim, wherein the spar cap (130) of the upper shell (110), the spar cap of the lower shell, or both the spar caps comprise an unidirectional composite material.

5. The wind turbine blade (106) of any preceding claim, wherein the at least one cavity structure (140) comprises fiber-reinforced plastic.

6. The wind turbine blade (106) of any preceding claim, wherein the cavity structure (140) comprises a bonding material disposed in the cavity.

7. The wind turbine blade (106) of claim 6, wherein the cavity (140) comprises at least 50 percent bonding material, by total volume of the cavity.

8. The wind turbine blade (106) of any preceding claim, wherein the transverse end and a portion of the longitudinal side of the shear web (124) are encased in a bonding material.

9. The wind turbine blade (106) of any preceding claim, wherein the transverse end of the shear web (124) forms a bond with a bottom wall of a cavity (150), and the portion of the longitudinal side of the shear web (124) forms a bond with a side wall of a cavity structure (140) through the bonding material.

10. The wind turbine blade (106) of any preceding claim, wherein a bond thickness of the transverse end of the shear web (124) to the bottom wall of the cavity is up to 30 millimeters.

11. The wind turbine blade (106) of any preceding claim, wherein a bond thickness of the portion of the longitudinal side of the shear web (124) to the side wall of the cavity structure is in a range from 1 millimeter to 10 millimeters.

12. The wind turbine blade (106) of any preceding claim, wherein a bond width of the shear web (124) with the bonding material is in a range from 20 millimeters to 200 millimeters.

13. The wind turbine blade (106) of any preceding claim, wherein the ratio of the width of the shear web (124) to the bond thickness of the longitudinal side of the shear web with the side wall of the cavity structure is between 4:1 and 14:1.

14. A method for assembling a shear web (124) in a wind turbine blade (106), **characterized by**:

    manufacturing a spar cap (130) comprising at least one cavity structure (140) comprising side walls (142,144) disposed on an internal surface of an upper shell member (110), an internal surface of a lower shell member, or both the shell members, along a longitudinal length of a blade, wherein the side walls have extended portions from a top end of a cup-shaped cavity,
    disposing a bonding material within a cavity (150) of the at least one cavity structure (140), positioning a transverse end of a shear web (124) in the cavity (150), wherein a ratio of a width of the shear web (124) to a bond thickness of a longitudinal side of the shear web (124) with the corresponding sidewall (142,144) of the cavity structure (140) is between 1:1 and 15:1, wherein the shear web is held in the center of the cavity by a distance holder, wherein the extended portions are distance holders,
    wherein the at least one cavity structure (140) comprises the cup-shaped cavity having a bottom wall between the side walls extending away from the spar cap (130) so as to extend along the longitudinal sides of the shear web (124).

## Patentansprüche

1. Ein Windturbinenblatt (106), umfassend:

    ein oberes Schalenelement (110) mit einem Holmgurt (130), der an einer inneren Fläche der oberen Schale angeordnet ist,
    ein Unterschalenelement mit einem Holmgurt, der an einer inneren Fläche der unteren Schale angeordnet ist,
    wobei der Holmgurt (130) des oberen Schalenelements (110), der Holmgurt des unteren Schalenelements oder beide Holmgurte mindestens eine Hohlraumstruktur (140) umfasst, die Seitenwände (142, 144) umfasst, die sich entlang einer Längslänge des Blattes erstrecken,
    mindestens einen Schersteg (124), der sich zwischen den Holmgurten (130) entlang der Längsrichtung des Blattes erstreckt, wobei ein Querende des Scherstegs (124) in der mindestens einen Hohlraumstruktur (140) positioniert ist, wobei ein Verhältnis von einer Breite des Scherstegs (124) zu einer Verbindungsdicke einer Längsseite des Scherstegs (124) mit der entsprechenden Seitenwand (142, 144) der Hohlraumstruktur (140) zwischen 1:1 und 15:1 beträgt, und
wobei die mindestens eine Hohlraumstruktur (140) einen becherförmigen Hohlraum umfasst, der eine Bodenwand zwischen den Seitenwänden hat, die sich von dem Holmgurt (130) weg erstreckt, um sich entlang der Längsseiten des Scherstegs (124) zu erstrecken, **dadurch gekennzeichnet, dass** die Seitenwände sich von einem oberen Ende des becherförmigen Hohlraums erstreckende Abschnitte haben, einen Abstandshalter, um den Schersteg in der Mitte des Hohlraums zu halten, wobei die sich erstreckende Abschnitte Abstandshalter sind.

2. Das Windturbinenblatt (106) von Anspruch 1, wobei der Hohlraum (140) eine Tiefe von 50 Millimeter bis 150 Millimeter hat.

3. Das Windturbinenblatt (106) von einem der vorhergehenden Ansprüche, wobei der Hohlraum (140) eine Breite in einem Bereich von 10 Millimeter bis 100 Millimeter hat.

4. Das Windturbinenblatt (106) von einem der vorhergehenden Ansprüche, wobei der Holmgurt (130) der oberen Schale (110), der Holmgurt der unteren Schale oder beide Holmgurte ein unidirektionales Verbundwerkstoff umfassen.

5. Das Windturbinenblatt (106) von einem der vorhergehenden Ansprüche, wobei die mindestens eine Hohlraumstruktur (140) faserverstärkten Kunststoff umfasst.

6. Das Windturbinenblatt (106) von einem der vorhergehenden Ansprüche, wobei die Hohlraumstruktur (140) ein Verbindungsmaterial umfasst, das in dem Hohlraum angeordnet ist.

7. Das Windturbinenblatt (106) von Anspruch 6, wobei der Hohlraum (140) mindestens 50 Prozent Verbindungsmaterial, bezogen auf das Gesamtvolumen des Hohlraums, umfasst.

8. Das Windturbinenblatt (106) von einem der vorhergehenden Ansprüche, wobei das Querende und ein Abschnitt der Längsseite des Scherstegs (124) von einem Verbindungsmaterial umschlossen sind.

9. Das Windturbinenblatt (106) von einem der vorhergehenden Ansprüche, wobei das Querende des Scherstegs (124) eine Verbindung mit einer Bodenwand eines Hohlraums (150) bildet und der Abschnitt der Längsseite des Scherstegs (124) eine Verbindung mit einer Seitenwand einer Hohlraumstruktur (140) durch das Verbindungsmaterial bildet.

10. Das Windturbinenblatt (106) von einem der vorhergehenden Ansprüche, wobei eine Verbindungsdicke des Querendes des Scherstegs (124) an der Bodenwand des Hohlraums bis zu 30 Millimeter beträgt.

11. Das Windturbinenblatt (106) von einem der vorhergehenden Ansprüche, wobei eine Verbindungsdicke des Abschnitts der Längsseite des Scherstegs (124) an der Seitenwand der Hohlraumstruktur in einem Bereich von 1 Millimeter bis 10 Millimeter liegt.

12. Das Windturbinenblatt (106) von einem der vorhergehenden Ansprüche, wobei eine Verbindungsbreite des Scherstegs (124) mit dem Verbindungsmaterial in einem Bereich von 20 Millimeter bis 200 Millimeter liegt.

13. Das Windturbinenblatt (106) von einem der vorhergehenden Ansprüche, wobei das Verhältnis der Breite des Scherstegs (124) zu der Verbindungsdicke der Längsseite des Scherstegs mit der Seitenwand der Hohlraumstruktur zwischen 4:1 und 14:1 liegt.

14. Ein Verfahren zum Montieren eines Scherstegs (124) in einem Windturbinenblatt (106), **gekennzeichnet durch**:

herstellen von einem Holmgurt (130) umfassend mindestens eine Hohlraumstruktur (140) umfassend Seitenwände (142, 144), die an einer inneren Fläche eines oberen Schalenelements (110), einer inneren Fläche eines unteren Schalenelements, oder beider Schalenelemente, entlang einer Längslänge eines Blattes angeordnet sind, wobei die Seitenwände sich erstreckende Abschnitte von einem oberen Ende eines becherförmigen Hohlraums haben, anordnen eines Verbindungsmaterials innerhalb eines Hohlraums (150) der mindestens einen Hohlraumstruktur (140), positionieren eines Querendes eines Scherstegs (124) in dem Hohlraum (150), wobei ein Verhältnis einer Breite des Scherstegs (124) zu einer Verbindungsdicke einer Längsseite des Scherstegs (124) mit der entsprechenden Seitenwand (142, 144) der Hohlraumstruktur (140) zwischen 1:1 und 15:1 beträgt, wobei der Schersteg in der Mitte des Hohlraums durch einen Abstandshalter gehalten wird, wobei die sich erstreckenden Abschnitte Abstandshalter sind, wobei die mindestens eine Hohlraumstruktur (140) den becherförmigen Hohlraum mit einer Bodenwand zwischen den Seitenwänden umfasst, die sich von dem Holmgurt (130) weg erstreckt, um sich entlang der Längsseiten des Scherstegs (124) zu erstrecken.

**Revendications**

1.  Une pale d'éolienne (106), comprenant :

    un élément de coque supérieur (110) ayant un capuchon de longeron (130) disposé sur une surface intérieure de la coque supérieure,
    un élément de coque inférieur ayant un capuchon de longeron disposé sur une surface intérieure de la coque inférieure,
    dans laquelle le capuchon de longeron (130) de l'élément de coque supérieur (110), le capuchon de longeron de l'élément de coque inférieur ou les deux capuchons de longeron comprend au moins une structure de cavité (140) comprenant des parois latérales (142, 144) s'étendant le long d'une longueur longitudinale de la pale,
    au moins une âme de cisaillement (124) s'étendant entre les capuchons de longeron (130) le long de la longueur longitudinale de la pale, avec une extrémité transversale de l'âme de cisaillement (124) positionnée dans la au moins une structure de cavité (140), dans laquelle un rapport d'une largeur de l'âme de cisaillement (124) à une épaisseur de liaison d'un côté longitudinal de l'âme de cisaillement (124) avec la paroi latérale correspondante (142, 144) de la structure de cavité (140) est d'entre 1:1 et 15:1, et
    dans laquelle ladite au moins une structure de cavité (140) comprend une cavité en forme de coupe ayant une paroi de fond entre les parois latérales s'étendant à l'écart du capuchon de longeron (130) de manière à s'étendre le long des côtés longitudinaux de l'âme de cisaillement (124), **caractérisée en ce que** les parois latérales ont des parties étendues à partir d'une extrémité supérieure de la cavité en forme de coupe,
    un support de distance pour maintenir l'âme de cisaillement au centre de la cavité, dans laquelle les parties étendues sont des supports de distance.

2.  La pale d'éolienne (106) de la revendication 1, dans laquelle la cavité (140) a une profondeur de 50 millimètres à 150 millimètres.

3.  La pale d'éolienne (106) de l'une quelconque des revendications précédentes, dans laquelle la cavité (140) a une largeur dans une plage de 10 millimètres à 100 millimètres.

4.  La pale d'éolienne (106) de l'une quelconque des revendications précédentes, dans laquelle le capuchon de longeron (130) de la coque supérieure (110), le capuchon de longeron de la coque inférieure, ou les deux capuchons de longeron comprennent un matériau composite unidirectionnel.

5.  La pale d'éolienne (106) de l'une quelconque des revendications précédentes, dans laquelle la au moins une structure de cavité (140) comprend du plastique renforcé par des fibres.

6.  La pale d'éolienne (106) de l'une quelconque des revendications précédentes, dans laquelle la structure de cavité (140) comprend un matériau de liaison disposé dans la cavité.

7.  La pale d'éolienne (106) de la revendication 6, dans laquelle la cavité (140) comprend au moins 50 pour cent de matière de liaison, par rapport au volume total de la cavité.

8.  La pale d'éolienne (106) de l'une quelconque des revendications précédentes, dans laquelle l'extrémité transversale et une partie du côté longitudinal de l'âme de cisaillement (124) sont enveloppées dans un matériau de liaison.

9.  La pale d'éolienne (106) de l'une quelconque des revendications précédentes, dans laquelle l'extrémité transversale de l'âme de cisaillement (124) forme une liaison avec une paroi de fond d'une cavité (150), et la partie du côté longitudinal de l'âme de cisaillement (124) forme une liaison avec une paroi latérale d'une structure de cavité (140) à travers le matériau de liaison.

10.  La pale d'éolienne (106) de l'une quelconque des revendications précédentes, dans laquelle une épaisseur de liaison de l'extrémité transversale de l'âme de cisaillement (124) à la paroi de fond de la cavité est de jusqu'à 30 millimètres.

11.  La pale d'éolienne (106) de l'une quelconque des revendications précédentes, dans laquelle une épaisseur de liaison de la partie du côté longitudinal de l'âme de cisaillement (124) à la paroi latérale de la structure de cavité est dans une plage de 1 millimètre à 10 millimètres.

12.  La pale d'éolienne (106) de l'une quelconque des revendications précédentes, dans laquelle une largeur de liaison de l'âme de cisaillement (124) avec le matériau de liaison est dans une plage de 20 millimètres à 200 millimètres.

13.  La pale d'éolienne (106) de l'une quelconque des revendications précédentes, dans laquelle le rapport de la largeur de l'âme de cisaillement (124) à l'épaisseur de liaison du côté longitudinal de l'âme de cisaillement avec la paroi latérale de la structure de cavité est d'entre 4:1 et 14:1.

14.  Un procédé d'assemblage d'une âme de cisaillement (124) dans une pale d'éolienne (106), **carac-**

**térisé par** :

fabriquer un capuchon de longeron (130) comprenant au moins une structure de cavité (140) comprenant des parois latérales (142, 144) disposées sur une surface intérieure d'un élément de coque supérieur (110), une surface intérieure d'un élément de coque inférieur, ou les deux éléments de coque, le long d'une longueur longitudinale d'une pale, où les parois latérales ont des parties étendues à partir d'une extrémité supérieure d'une cavité en forme de coupe,

disposer un matériau de liaison à l'intérieur d'une cavité (150) de la au moins une structure de cavité (140),

positionner une extrémité transversale d'une âme de cisaillement (124) dans la cavité (150), dans laquelle un rapport d'une largeur de l'âme de cisaillement (124) à une épaisseur de liaison d'un côté longitudinal de l'âme de cisaillement (124) avec la paroi latérale correspondante (142, 144) de la structure de cavité (140) est d'entre 1:1 et 15:1,

dans lequel l'âme de cisaillement est maintenue au centre de la cavité par un support de distance, où les parties étendues sont des supports de distance,

dans lequel la au moins une structure de cavité (140) comprend la cavité en forme de coupe ayant une paroi de fond entre les parois latérales s'étendant à l'écart du capuchon de longeron (130) de manière à s'étendre le long des côtés longitudinaux de l'âme de cisaillement (124).

FIG. 1
PRIOR ART

FIG. 2
PRIOR ART

FIG. 3
PRIOR ART

FIG. 4

FIG. 5

FIG. 6

FIG. 7

EP 2 878 807 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013086667 A

**Non-patent literature cited in the description**

- **GARDINER et al.** *Composites World*